# EUROPÄISCHE PATENTANMELDUNG

(11) **EP 1 953 568 A1**
(43) Veröffentlichungstag der Anmeldung: **06.08.2008**
(21) Anmeldenummer: 08100088.7
(22) Anmeldetag: 04.01.2008
(51) Int. Cl.: G01S 17/93, G01S 17/36, G01J 9/00, G05D 1/02

(54) **Imager-Halbleiterbauelement, Kamerasystem und Verfahren zum Erstellen eines Bildes**

(30) Priorität: 29.01.2007 DE 102007004348
(71) Anmelder: ROBERT BOSCH GMBH, 70442 Stuttgart (DE)
(72) Erfinder: Wuerz-Wessel, Alexander, 70599 Stuttgart (DE); Lorei, Marcus, 71287 Weissach-Flacht (DE)

(57) **Zusammenfassung**

Die Erfindung betrifft ein Imager-Halbleiterbauelement für ein Kamerasystem (4) eines Fahrzeugs, das aufweist:
eine zweidimensionale integrierte Anordnung von Imager-Pixeln (Bij) zur Aufnahme von optischer oder infraroter Strahlung und Ausgabe von Bildsignalen (bij).

Erfindungsgemäß ist vorgesehen, dass auf dem Imager-Halbleiterbauelement Mess-Zellen (Pkl), insbesondere PMD-Zellen, für eine Entfernungsbestimmung durch Laufzeitmessung von optischer oder infraroter Strahlung (IR) integriert sind.

Hierdurch wird ein monokulares Kamerasystem (4) und ein Verfahren zu dessen Verwendung ermöglicht, bei denen Infrarot-Strahlung (IR) für eine Laufzeitmessung ausgesendet wird und aus von den Imager-Pixeln (Bij) ausgegebenen Bildsignale (bij) und von den Mess-Zellen (Pkl) ausgegebenen Mess-Zellen-Signalen (pkl) ein kombiniertes Bild mit Bild- und Tiefendarstellung erstellt wird, das Entfernungsinformationen der Mess-Zellen-Signalen (pkl) enthält.

## Beschreibung

Die Erfindung betrifft ein Imager-Halbleiterbauelement, ein Kamerasystem mit einem derartigen Imager-Halbleiterbauelement und ein Verfahren zum Erstellen eines Bildes mit einem derartigen Kamerasystem. Das erfindungsgemäße Kamerasystem kann insbesondere in einem Fahrzeug eingesetzt werden.

### Stand der Technik

In Fahrzeugen werden zum Teil monokulare Kameras eingesetzt, die die Straßensituation vor und gegebenenfalls neben dem Fahrzeug erfassen, wobei das erfasste Bild direkt auf einem Monitor wiedergegeben oder in einer Nachverarbeitung mit Bildverarbeitungsalgorithmen ausgewertet wird. Bei der Auswertung können aus dem aufgenommenen Grauwert- oder Farbbild unterschiedliche Details der Straßenszene ermittelt werden, z.B. mit Fahrspurerkennung, Verkehrszeichenerkennung, Objekterkennung oder Bildaufbereitung zur Anzeige. Die Winkelauflösung derartiger Kameras liegt bei ca. 15 bis 25 Pixel pro Grad. Ein derartiges Kamerabild ist somit hoch aufgelöst und bietet einen relativ guten Kontrast, so dass Objekte mit einer hohen lateralen Auflösung vermessen werden können. Die Grauwert- oder Farbbilder ermöglichen hierbei auch die Kantenerfassung der Objekte.

Derartige Kamerasysteme weisen im Allgemeinen einen Imager-Chip auf, auf dessen Oberseite eine Matrixanordnung von Imager-Pixeln (Bildaufnahme-Pixeln) ausgebildet ist, wobei eine Optikeinrichtung des Kamerasystems einen im Wesentlichen kegelförmigen Bildbereich vor und gegebenenfalls neben dem Fahrzeug erfasst und auf die Matrixanordnung der Imager-Pixel abbildet, die nachfolgend entsprechend ausgelesen werden.

Nachteilhaft bei der monokularen Bildverarbeitung ist jedoch, dass Entfernungen nicht direkt gemessen werden können. Hierzu behilft man sich üblicherweise mit Annahmen zur Oberfläche und einer entsprechenden Schätzung der Entfernung aus der Unterkante des Objektes. Derartige Verfahren sind jedoch ungenau.

Zur Ermittlung von Entfernungen bzw. Bildtiefen sind PMD (Photomischdetektor, photo mixer device)-Kameras bekannt. Hierbei wird Infrarot-Strahlung, vorzugsweise im Nah-Infrarotbereich bei z. B. 870 nm, für Laufzeitmessungen verwendet, wobei aus der Phasendifferenz zwischen der ausgesandten und empfangenen IR-Strahlung auf den Abstand geschlossen werden kann. Von einer Infrarot-Beleuchtungseinrichtung wird mit einer Modulationsfrequenz von z. B. 20 MHz modulierte IR-Strahlung ausgesendet und die von Objekten im Erfassungsbereich reflektierte Strahlung nachfolgend von PMD-Zellen, die im Allgemeinen in CMOS-Technologie hergestellt sind, aufgenommen. Um Uneindeutigkeiten bzw. mathematische Vielfachlösungen auszuschließen, wird im Allgemeinen mehr als eine Modulationsfrequenz verwendet. Die von den aufgenommenen Photonen der IR-Strahlung erzeugten Elektronen werden noch im lichtempfindlichen Halbleiterbereich der PMD-Zellen mit Hilfe einer so genannten Ladungsträgerschaukel selektiv getrennt, wozu ein mit der Modulation der IR-Strahlung gekoppeltes Referenzsignal verwendet wird. Die PMD-Zellen liefern somit ein Helligkeitsbildsignal mit Entfernungsinformationen.

Eine Schwierigkeit des PMD liegt hierbei in der Entwicklung großflächiger Imager, um größere Bereiche mit höherer Auflösung beobachten zu können. Darüber hinaus wird eine PMD-CMOS-Zelle nahe ihrer Sättigung gefahren, um eine möglichst gute dreidimensionale Messung zu ermöglichen. Hierdurch leidet jedoch der Kontrast im Grauwertbereich. Es ergibt sich somit ein Bild mit sehr hohem Kontrast, d.h. geringer Grauwertabstufung, und relativ geringer Auflösung, so dass eine übliche Bildverarbeitung schwierig ist.

Die DE 100 02 069 A1 beschreibt eine Anordnung zur Verbesserung der Sicht in Fahrzeugen, bei der eine Beleuchtungsoptik permanent gepulstes Infrarot-Licht abstrahlt und eine Empfangsoptik reflektierte Anteile des abgestrahlten Lichtes empfängt. Die IR-Strahlung wird von einer CCD-Kamera des Fahrzeuges aufgenommen und auf einem Bildschirm nachfolgend als sichtbares Bild dargestellt. Hierbei wird der gepulste Betrieb der Laserdioden mit der Verschlusszeit der CCD-Kamera synchronisiert.

Die DE 40 07 646 A1 beschreibt eine weitere Anordnung mit einer Beleuchtungsoptik, Empfangsoptik und Darstellungsoptik. Hierbei kann ein Kamerabereich alternativ entweder durch eine zweidimensionale Strahlaufweitung eines Laserstrahls gleichzeitig ausgeleuchtet oder der Laserstrahl in nur einer Richtung bei gleichzeitiger enger Bündelung in der orthogonalen zweiten Richtung und Schwenken entlang eines Raumwinkels geführt oder ein gebündelter Laserstrahl in zwei Dimensionen zur Abtastung verstellt werden.

### Offenbarung der Erfindung

Der Erfindung liegt der Gedanke zugrunde, einen Imager-Chip mit Imager-Pixeln (Bildaufnahme-Pixeln), die im optischen oder infraroten Bereich Strahlung detektieren und ein hoch aufgelöstes Bild liefern, mit einem Sensor für eine Entfernungsbestimmung durch Laufzeitmessung hardwaremäßig zu koppeln. Hierzu sind auf dem Imager-Chip Mess-Zellen integriert; diese Mess-Zellen können insbesondere PMD-Zellen sein.

Erfindungsgemäß wird somit eine direkte Kopplung der von den Imager-Pixeln ausgegebenen Imager-Bildsignale mit den Mess-Zellen-Signalen ermöglicht, da die räumliche Anordnung der Mess-Zellen im Verhältnis zu den Imager-Pixeln bekannt ist. Es wird somit ein hochaufgelöstes Bild aufgenommen, das an einigen Stellen Tiefenangaben bzw. Entfernungsangaben enthält, die als Stützstellen zur Erstellung einer dreidimensionalen Darstellung dienen können.

Hierbei wird erfindungsgemäß erkannt, dass sich die Imager-Bildaufnahme-Technologie und die PMD-Zellen-Technologie sehr gut ergänzen. Das Imager-Bild ist hoch aufgelöst und bietet einen guten Kontrast, so dass eine Vermessung von Objekten mit guter lateraler Auflösung möglich ist. Das niedrig aufgelöste PMD-Bild liefert hingegen insbesondere im Nahbereich gute Entfernungsdaten. Da beide Systeme auf in Prinzip gleichen Halbleiter-Technologien, nämlich CCD und/oder CMOS aufbauen, können sie bereits hardwaremäßig kombiniert werden. Erfindungsgemäß erfolgt hierbei eine Integration auf einem gemeinsamen Halbleiterbauelement bzw. Chip.

Als Mess-Zellen zur Tiefenmessung können anstelle von PMD-Zellen grundsätzlich auch andere Messelemente zur Entfernungsbestimmung mittels Laufzeitmessung eingesetzt werden, z.B. Laser-LEDs mit gepulstem Licht. Ein besonderer Vorteil der PMD-Zellen liegt jedoch in der im Prinzip gleichen Herstellungstechnologie wie die Imager-Pixel sowie in den bereits im Halbleitermaterial erfolgenden Kopplung bzw. Mischung der Phaseninformationen zwischen ausgesandten und empfangenen Licht, so dass direkt Messsignale mit Entfernungsinformationen bzw. Tiefeninformationen ausgegeben werden.

Die PMD-Zellen können zum einen regelmäßig über die Matrixanordnung der Imager-Pixel verteilt angeordnet sein, um eine gleichmäßige Rasterung des Bildbereichs zu ermöglichen. Da bei einem derartigen gleichmäßigen Raster sich jedoch Auflösungen des PMD-Bildes mit z. B. einem Winkelgrad ergeben, kann ein Objekt mit einer geringeren Dimensionierung in Querrichtung oder vertikaler Richtung eventuell zeitweise von dem PMD-Zellen nicht erfasst werden. Erfindungsgemäß wird hierbei erkannt, dass dies insbesondere ein Fußgänger mit hoher Vertikalerstreckung und geringer lateraler Erstreckungen sein könnte. Daher können die PMD-Zellen gemäß einer Ausführungsform nicht gleichmäßig matrixartig, sondern in zueinander versetzten Zeilen angeordnet sein, so dass länglichere Objekte mit Vertikalerstreckung, die gegebenenfalls von einer Zeile der Mess-Zellen nicht erfasst werden, zumindest von benachbarten Zeilen erfasst werden können.

Erfindungsgemäß wird weiter erkannt, dass es für z.B. Fahrerassistenzsystem in der Regel ausreichend ist, wenn in einem bestimmten Bildbereich Tiefen gemessen werden können. Dies kann insbesondere der untere Bildbereich sein, da sich üblicherweise alle Objekte auf dem Boden bewegen und fliegende Objekte gar nicht oder kaum auftreten bzw. nicht relevant sind.

Somit können die PMD-Zellen ausschließlich oder schwerpunktsmäßig in einem Teilbereich des Imager-Chips angeordnet sein, und insbesondere zur Vermessung des unteren Bildbereichs dienen. Die PMD-Zellen können auch als geschlossenes Array bzw. eigene Matrix angrenzend an die Matrix der Imager-Pixel angeordnet sein. Insbesondere bei derartigen Anordnungen kann die eingesetzte Optik entsprechend angepasst werden, so dass die PMD-Zellen die für die Funktion interessanten Bereiche tiefenvermessen. Durch die fixe Integration der Imager-Pixel und PMD-Zellen auf einem Chip ist bei bekannter Optik automatisch die Kreuzkalibrierung zwischen dem Imager-Bild und dem PMD gegeben, so dass die vermessenen Tiefen immer Bildbereichen zugeordnet werden können.

Die in den Imager-Pixel-Array anstelle einiger Imager-Pixel eingesetzten PMD-Zellen liefern zunächst feste Muster im Bild, da die PMD-Zellen ein qualitativ schlechteres Bild und insbesondere auch eine geringere Auflösung aufweisen. Sie bilden insbesondere helle Flecken in dem Graustufenbild oder Farbbild, die je nach Größenverhältnis der Imager-Pixel zu den PMD-Zellen mehrere Pixel der Imager-Matrix ersetzen können. Hierzu kann erfindungsgemäß eine Tote-Pixel-Korrektur durch z.B. Interpolation aus den umliegenden Imager-Pixeln erfolgen. Hierzu kann auf sich bekannte Algorithmen zugegriffen werden, da auch handelsübliche Imager - gegebenenfalls nach einiger Zeit - nicht voll funktionsfähige Pixel, d.h. "tote Pixel" aufweisen, die kein entsprechendes Graustufenbild mehr liefern, sondern nicht mehr ansprechen und in dem Bild immer schwarz wären. Ein derartiges festes Muster wird bei bekannten Bildverarbeitungsalgorithmen erkannt und durch Tote-Pixel-Korrektur bearbeitet. Derartige Bildverarbeitungsalgorithmen können erfindungsgemäß auch bei der Korrektur der Beeinflussung durch die eingesetzten PMD-Zellen herangezogen werden.

Erfindungsgemäß kann somit mit relativ geringem Aufwand, insbesondere Standard-Herstellungsverfahren, ein Imager-Halbleiterbauelement hergestellt werden, das eine gute optische Bildverarbeitung mit zusätzlicher Tiefenvermessung ermöglicht. Das gelieferte, auf einem Monitor darzustellende Bild kann qualitativ gleichwertig oder fast gleichwertig mit einem Imager-Bild ohne zusätzliche PMD-Zellen sein und zusätzlich für die Darstellung und Ermittlung der erfassten Objekte relevante Tiefeninformationen liefern.

Somit kann auch durch ein monokulares Kamerasystem erfindungsgemäß eine hochwertige Bildverarbeitung mit Tiefenangeben erreicht werden.

### Kurze Beschreibung der Zeichnungen

- Fig. 1: zeigt eine Straßensituation eines Fahrzeuges mit einem erfindungsgemäßen Kamerasystem und weiteren Objekten;
- Fig. 2: zeigt das erfindungsgemäße Kamerasystem gemäß dieser Ausführungsform;
- Fig. 3: zeigt eine Aufsicht auf den Imager-Chip gemäß einer ersten Ausführungsform mit gleichmäßiger Matrix-Verteilung der PMD-Zellen auf dem Imager-Chip;
- Fig. 4: zeigt eine Aufsicht auf den Imager-Chip gemäß einer weiteren Ausführungsform mit einer ungleichmäßigen Verteilung der PMD -Zellen des Imager-Chips;
- Fig. 5a,: b zeigt verschiedene versetzte Anordnungen der PMD -Zellen auf dem Imager-Chip gemäß einiger Ausführungsformen;
- Fig. 6: zeigt eine Aufsicht auf den Imager-Chip gemäß einer weiteren Ausführungsform mit getrennten Bereichen der Bildaufnahmepixel und PMD - Zellen;
- Fig. 7: zeigt ein Flussdiagramm eines erfindungsgemäßen Verfahrens.

### Beschreibung der Ausführungsformen

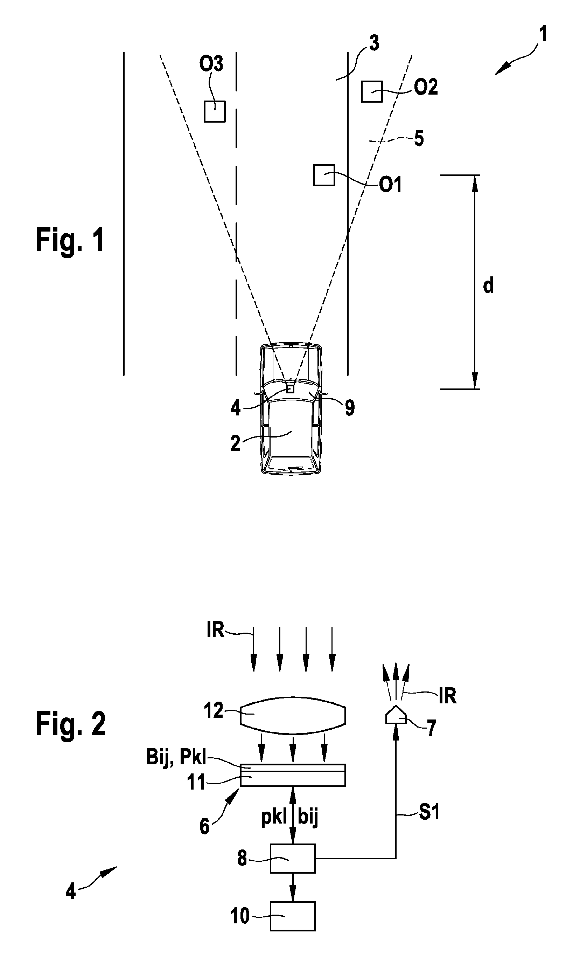

In einer Straßensituation 1 fährt gemäß Fig. 1 ein Fahrzeug 2 auf einer Fahrbahn 3. Das Fahrzeug 2 weist ein in Fig. 2 detaillierter gezeigtes erfindungsgemäßes Kamerasystem 4 auf, das einen im Wesentlichen kegelförmigen optischen Erfassungsbereich (Kamerabereich) 5 vor und neben dem Fahrzeug 2 erfasst.

Das Kamerasystem 4 erfasst in seinem Erfassungsbereich 5 in unterschiedlichen Entfernungen d die Fahrbahn 3, und weiterhin verschiedene auf oder neben der Fahrbahn 3 sich befindende Objekte O1, O2, O3. Das erfindungsgemäße Kamerasystem 4 weist eine Optikeinrichtung 12, einen Imager-Chip 6, eine Infrarot (IR) -Beleuchtungseinrichtung 7 mit z.B. ein oder mehreren IR-LEDs, eine Steuereinrichtung 8 zur Ansteuerung der IR- Beleuchtungseinrichtung 7 mit ersten Signalen S1 und Aufnahme von Signalen bij und pkl von dem Imager-Chip 6 sowie eine Auswerteeinrichtung 10 auf. Die Steuereinrichtung 8 und die Auswerteeinrichtung 10 können hierbei als Steuergerät 8, 10 des Kamerasystem 4 kombiniert bzw. integriert sein. Die Optikeinrichtung 12 und der Imager-Chip 6 sind vorzugsweise hinter der Windschutzscheibe 9 angeordnet, die Beleuchtungseinrichtung 7 kann außerhalb der Windschutzscheibe 9 angeordnet sein, z. B. im Bereich der Stoßfänger.

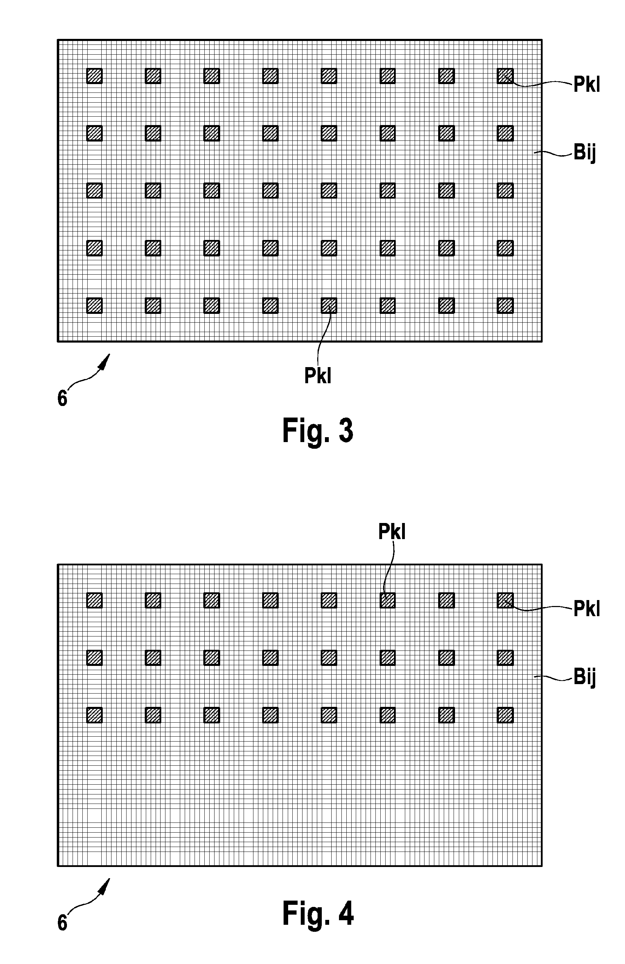

Erfindungsgemäß sind auf dem gemeinsamen Substrat 11 des Imager-Chips 6 Imager-Pixel (Bildaufnahmepixel) Bij und PMD-Zellen Pkl ausgebildet, wobei die Fig. 3 bis 6 Aufsichten auf den Imager-Chip 6 mit unterschiedlichen Anordnungen der Imager-Pixel Bij und PMD-Zellen Pkl zeigen. Die Imager-Pixel Bij sind in an sich bekannter Weise in einer Matrixanordnung aus Zeilen und Spalten angeordnet und nehmen die von dem Erfassungsbereich 5 ausgesandte Strahlung bzw. Licht über eine Optikeinrichtung 12 gebündelt auf. Die Imager-Pixel Bij sind in CMOS oder CCD-Technologie ausgebildet und können gemäß unterschiedlicher Ausführungsformen zur Aufnahme vom Licht im optischen Bereich oder auch im IR-Bereich dienen.

Bei einer Ausführungsform mit im optischen Bereich sensitiven Imager-Pixeln Bij dient der Imager-Chip als Video-Kamera zur Aufnahme eines Grauwert- oder Farbbildes, wobei das Grauwert- oder Farbbild anschließend auf einem Monitor im Fahrzeug dargestellt und/oder mittels Bildverarbeitungsalgorithmen auf relevante Merkmale untersucht werden kann, z.B. die Fahrbahn 3 bzw. die für das Fahrzeug 2 relevante Spur und weiterhin Objekte O1, 02, 03, z. B. Fahrbahnmarkierungen, Verkehrsschilder, Ampeln usw.. Bei einer derartigen Auswertung des Bildes können ergänzend auch Gefahrensituationen durch mögliche Kollisionen mit den Objekten O1, 02, 03 von der Auswerteeinrichtung 10 erkannt und gegebenenfalls dem Fahrer signalisiert werden oder auch zu einem Eingriff in die Fahrdynamik oder das Bremssystem führen.

Bei einer Ausführungsform mit im IR-Bereich sensitiven Imager-Pixeln Bij dient das Kamerasystem vorzugsweise als Nachtsicht-Kamerasystem, um ohne eine Blendung des Gegenverkehr oder anderer Verkehrsteilnehmer einen weiten Erfassungsbereich 5 mit IR-Strahlung ausleuchten zu können und das Bild nachfolgend auf dem Monitor im sichtbaren Licht, z. B. auch mit Graustufen, darzustellen.

Die PMD (Photomischdetektor, photo mixer device)-Zellen Pkl detektieren das von der Infrarot-Beleuchtungseinrichtung 7 im Erfassungsbereich 5 reflektierte Licht bzw. IR-Strahlung. Hierbei wird sowohl die von der Fahrbahn 3 als auch die von den Objekten O1, 02, 03 reflektierte IR-Strahlung erfasst und ausgewertet. Die IR-Beleuchtungseinrichtung sendet in an sich bekannter Weise modulierte Lichtsignale aus, z. B. IR-Strahlung mit einer Wellenlänge von 800 bis 2000 nm und zwei oder mehr Modulationsfrequenzen von etwa 20 MHz. Hierbei steuert die Steuereinrichtung 8 die IR- Beleuchtungseinrichtung 7 und die PMD-Zellen Pkl des Imager-Chips 6 gekoppelt an, so dass bereits in dem Halbleitermaterial der PMD-Zellen Pkl eine Trennung mit Hilfe einer Ladungsträgerschaukel in Abhängigkeit der durch den unterschiedlichen Gangunterschied aufgetretenen Phasenverschiebung erfolgt. Die PMD-Zellen liefern hierbei ein Helligkeitsbildsignal mit geringem Kontrast im Grauwertbild und mit Entfernungsangaben.

Die Imager-Pixel Bij und PMD-Zellen Pkl sind auf dem Imager-Chip 6 in bekannter räumlicher Anordnung zueinander angebracht, so dass die von ihnen ausgegebenen Signale bij und pkl von der Steuereinrichtung 8 bzw. der Auswerteeinrichtung 10 entsprechend einander zugeordnet werden können.

Gemäß der Ausführungsform der Fig. 3 sind die Imager-Pixel Bij in einer 2D-Matrix-Anordnung vorgesehen und jeweils einige, z.B. neun benachbarte Imager-Pixel durch eine PMD-Zelle Pkl ersetzt. Grundsätzlich wäre auch ein Ersatz jeweils eines Imager-Pixels Bij durch genau eine PMD-Zelle Pkl möglich; im Allgemeinen sind PMD-Zellen jedoch größer dimensioniert. Gemäß Fig. 3 bilden die PMD-Zellen Pkl selbst wiederum eine Matrix-Anordnung, d.h. sie sind gleichmäßig in der Bij-Matrix verteilt angeordnet und erfassen daher in der vertikalen und horizontalen Richtung jeweils gleichmäßig beabstandete Punkte im Erfassungsbereich 5. Somit können über den gesamten Imager-Chip 6 in bestimmten Abständen Entfernungen bzw. Tiefen gemessen werden.

Fig. 4 zeigt eine weitere Ausführungsform, bei der die PMD-Zellen Pkl lediglich in einem Teilbereich des Imager-Chips 6, z.B. dem oberen Bereich angeordnet sind und dort z.B. wiederum eine gleichmäßige Verteilung darstellen. Aufgrund der optischen Abbildung durch die Optikeinrichtung 12 nimmt der in Fig. 4 oben dargestellte Teilbereich des Imager-Chips 6 den unteren Bildbereich bzw. den unteren Erfassungsbereich 5 mit der Fahrbahn 3 und im allgemeinen auch sämtlichen Objekten O1, O2, O3 auf. Somit erfolgt mit dem Imager-Chip der Fig. 4 eine Tiefenmessung in der unteren Bildhälfte; gegebenenfalls wird die Tiefenmessung anhand der Objekterkennung über den Horizont gezogen.

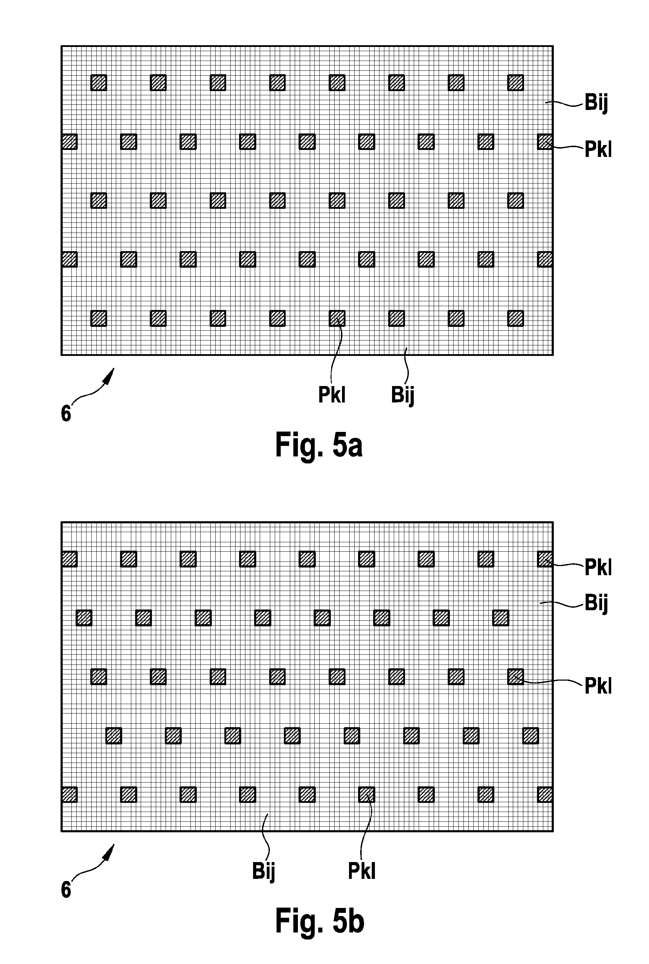

Die Imager-Pixel Bij des Imager-Chips 6 ermöglichen z.B. eine Auflösung von 1/20 Grad. Falls z.B. jedes zwanzigste Bildaufnahmepixel Bij durch eine PMD-Zelle Pkl ersetzt ist, wird durch die PMD-Zellen Pkl somit eine Tiefenabtastung von 1 Grad Auflösung ermöglicht. Bei einer Reichweite von ca. 25 m für das PMD entspricht dies einer Entfernung von 43 cm zwischen den PMD-Messstrahlen bzw. den durch die PMD-Messung gebildeten Tiefenabtastpunkten bzw. Tiefenabtaststützstellen. Da bei einem derartigen Rastermaß gegebenenfalls ein Fußgänger nicht erfasst werden könnte, können die PMD-Zellen Pkl gemäß Fig. 5a oder 5b gegeneinander versetzt angeordnet sein, d.h. die einzelnen Zeilen der PMD-Zellen Pkl sind gegeneinander versetzt. Fig. 5a zeigt eine mittige Versetzung bei jeder zweiten Zeile mit PMD-Zellen Pkl, Fig. 5b eine stufenweise Versetzung über vier Zeilen hinweg. Ein Fußgänger kann zwar eventuell zwischen zwei aufeinander folgenden PMD-Zellen Pkl, P(k+1)1 derselben Zeile mit Zeilennummer I nicht erfasst werden; aufgrund seiner größeren vertikalen Erstreckung wird er jedoch voraussichtlich von den PMD-Zellen Pk(I+1) oder Pk(I+2) der benachbarten Zeilen mit Zeilennummern I+1, I+2 erfasst.

Da die PMD-Zellen Pkl möglichst gesättigt betrieben werden und somit relativ helle Bildwert ausgeben, die helle Flecken im ausgegebenen Bild darstellen, kann von der Auswerteeinrichtung 10 eine Tote-Pixel-Korrektur als Bildverarbeitungsalgorithmus durchgeführt werden. Die Auswerteeinrichtung 10 verwendet somit als solche bekannte Algorithmen, um die durch die PMD-Zellen Pkl ersetzten Bildaufnahmepixel durch Interpolationsverfahren oder bei bekannter Kennlinie des Imagers aus Ableitung von Grauwerten zu ersetzen.

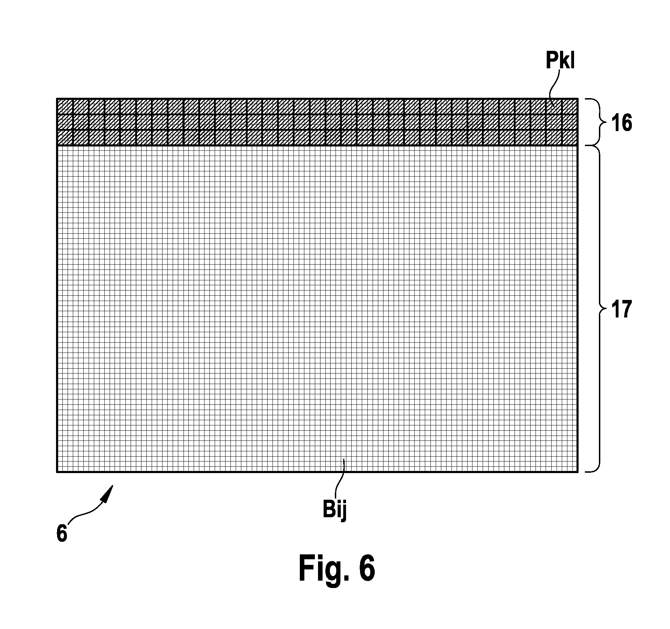

Fig. 6 zeigt eine weitere Ausführungsform, bei der die PMD-Zellen Pkl in einem separaten Bereich 16 angeordnet und die Imager-Pixel Bij somit durch diese nicht gestört werden oder (anders als gezeigt) einige wenige PMD-Zellen Pkl in der Matrix der Bij angeordnet sind. Somit kann z.B. ein PMD-Array 16 an den Imager-Bereich 17 mit den Imager-Pixeln Bij angesetzt werden. Eine derartige Ausführungsform kann z.B. gewählt werden, wenn die Störung des Bildes durch die PMD-Zellen ein für die Funktion nicht mehr akzeptables Maß überschreitet. Der PMD-Bereich 16 ist vorteilhafterweise so positioniert, dass der untere Erfassungsbereich 5, d.h. der untere Bildbereich erfasst wird, so dass wiederum aufgrund der Abbildung durch die Optikeinrichtung 12 im Allgemeinen der obere Teil des Imager-Chips 6 genommen wird. Auch bei dieser Ausführungsform ist durch die fixe Integration bei der bekannten Optikeinrichtung 12 automatisch die Kreuzkalibrierung zwischen dem von den Imager-Pixeln Bij erzeugten Bild und den Tiefenwerten der PMD-Zellen Pkl gegeben, so dass die Tiefenmesswerte den Bildbereichen zugeordnet werden können.

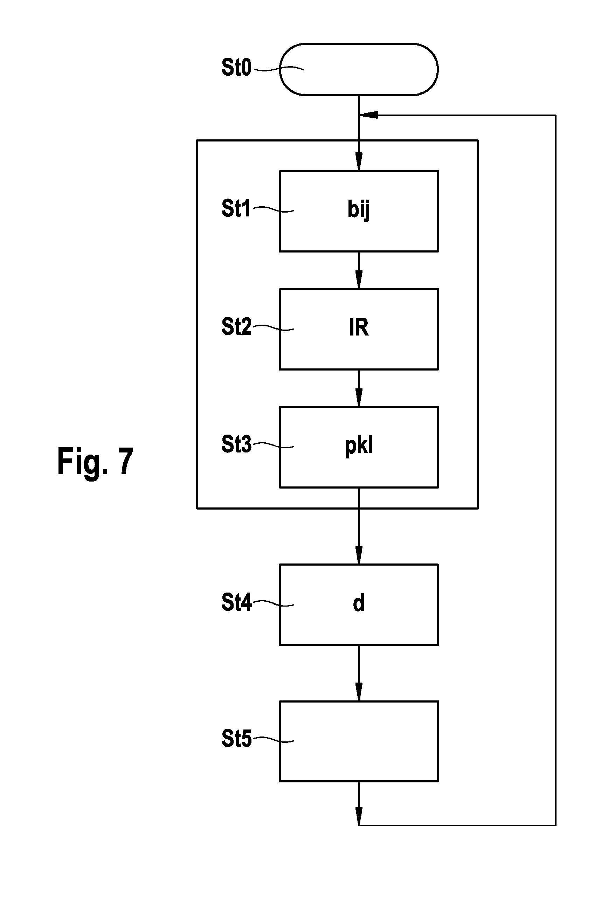

Das erfindungsgemäße Verfahren zur Bilderfassung und Bilderstellung wird gemäß dem Flussdiagramm der Fig. 7 in Schritt St0 bei Aktivierung des Kamerasystems 4, z.B. bei Anschalten der Zündung oder Start des Motors gestartet. In Schritt St1 werden von den Imager-Pixeln Bij des Imager-Chips 6 fortlaufend Bildsignale bij aufgenommen und an die Auswerteeinrichtung 10 ausgegeben. Weiterhin werden fortlaufend gemäß Schritt St2 von der IR-Beleuchtungseinrichtung 7 modulierte IR-Strahlen IR erzeugt und in den Erfassungsbereich 5 des Kamerasystems 4 ausgestrahlt und anschließend die reflektierten IR-Strahlen von den PMD-Zellen Pkl aufgenommen und hieraus PMD-Signale pkl mit Helligkeits- und Laufzeitwerten (Entfernungsangaben) ausgegeben. Die Schritte St1 und St2, St3 laufen hierbei gleichzeitig bzw. parallel ab, wobei die Pixel Bij und Zellen Pkl im Allgemeinen sukzessive ausgelesen werden.

In Schritt St4 werden die Signale bj und pkl einander aufgrund der bekannten Integration bzw. räumlichen Anordnung auf dem Imager-Chip 6 zugeordnet, so dass auch die Entfernungsdaten der PMD-Signale Pkl den Bildsignalen bij benachbarter bzw. aufgrund der bekannten Kreuzkorrelation auch weiter beabstandeten Imagerpixeln Bij zugeordnet werden können.

In Schritt St5 erfolgt die Bildausgabe an den Fahrer, z.B. auf einem Display im Dashboardbereich oder auch z. B. durch Projektion an die Windschutzscheibe. Weiterhin kann in Schritt St5 auch aufgrund einer Auswertung die Ausgabe eines Warnsignals und/oder ein Eingriff in die Fahrdynamik einschließlich Bremseneingriff erfolgen.

Wie durch die Schleife des Flussdiagramms der Fig. 7 angedeutet, verläuft das Verfahren hierbei fortlaufend.

## Patentansprüche

1. Imager-Halbleiterbauelement für ein Kamerasystem (4) eines Fahrzeugs, das mindestens aufweist:
eine zweidimensionale integrierte Anordnung von Imager-Pixeln (Bij) zur Aufnahme von optischer oder infraroter Strahlung (IR) und Ausgabe von Bildsignalen (bij),
**dadurch gekennzeichnet, dass**
auf dem Imager-Halbleiterbauelement (6) Mess-Zellen (Pkl) für eine Entfernungsbestimmung durch Laufzeitmessung von optischer oder infraroter Strahlung (IR) integriert sind.

2. Imager-Halbleiterbauelement nach Anspruch 1, **dadurch gekennzeichnet, dass** die Imager-Pixel (Bij) in einer Matrix-Anordnung angeordnet sind, in der ein oder mehrere Mess-Zellen (Pkl) für die Tiefenbestimmung auf jeweils einer Matrixstelle oder mehreren benachbarten Matrixstellen angeordnet sind.

3. Imager-Halbleiterbauelement nach Anspruch 2, **dadurch gekennzeichnet, dass** zumindest einige, vorzugsweise alle Mess-Zellen (Pkl) von Imager-Pixeln (Bij) umgeben sind.

4. Imager-Halbleiterbauelement nach Anspruch 2 oder 3, **dadurch gekennzeichnet, dass** die Mess-Zellen (Pkl) in einer Matrixanordnung aus Zeilen und Spalten mit gegenüber der Matrixanordnung der Imager-Pixel (Bij) vielfachem Abstand angeordnet sind.

5. Imager-Halbleiterbauelement nach einem der Ansprüche 2 bis 4, **dadurch gekennzeichnet, dass** die Mess-Zellen (Pkl) in Zeilen oder Spalten angeordnet sind, die zu benachbarten Zeilen oder Spalten mit Mess-Zellen (Pkl) versetzt sind.

6. Imager-Halbleiterbauelement nach einem der vorherigen Ansprüche, **dadurch gekennzeichnet, dass** die Mess-Zellen (Pkl) nur in einem Teilbereich der zweidimensionalen Anordnung von Imager-Pixeln (Bij) angeordnet sind.

7. Imager-Halbleiterbauelement nach einem der vorherigen Ansprüche, **dadurch gekennzeichnet, dass** zumindest ein Teil der Mess-Zellen (Pkl) in einem separaten Mess-Zellen-Bereich (16), z.B. als Mess-Zellen-Matrix, angeordnet sind, der an einen Imagerpixel-Bereich (17) mit den Imager-Pixeln (Bij) angrenzt.

8. Imager-Halbleiterbauelement nach einem der vorherigen Ansprüche, **dadurch gekennzeichnet, dass** die Imager-Pixel (Bij) und die Mess-Zellen (Pkl) als CCD-Elemente und/oder CMOS-Elemente auf einem gemeinsamen Substrat (11) integriert sind.

9. Imager-Halbleiterbauelement nach einem der vorherigen Ansprüche, **dadurch gekennzeichnet, dass** die Mess-Zellen (Pkl) PMD-Zellen zur Tiefenbestimmung durch Laufzeitmessung von infraroter Strahlung (IR) sind.

10. Monokulares Kamerasystem (4) mit
einem Imager-Halbleiterbauelement (6) nach einem der vorherigen Ansprüche,
einer Beleuchtungseinrichtung (7) zur Aussendung von modulierter Infrarot-Strahlung (IR) für eine Laufzeitmessung,
einer Steuereinrichtung (8) zur Ansteuerung des Imager-Halbleiterbauelements (6) und der Beleuchtungseinrichtung (7),
einer Auswerteeinrichtung (10) zur Aufnahme und Auswertung der von den Imager-Pixeln (Bij) ausgegebenen Bildsignale (bij) und der von den Mess-Zellen (Pkl) ausgegebenen Mess-Zellen-Signale (pkl), wobei die Auswerteeinrichtung (10) Entfernungsinformationen in den Mess-Zellen-Signalen (pkl) auswertet und ein kombiniertes Bild mit Bild- und Tiefendarstellung erstellt.

11. Kamerasystem nach Anspruch 10, **dadurch gekennzeichnet, dass** die Auswerteeinrichtung (10) zu Matrixstellen der zweidimensionalen Matrix von Imager-Pixeln (Bij), die durch Mess-Zellen (Pkl) ersetzt sind, Bildwerte mittels Interpolation aus Bildsignalen (bij) der umgebenden Imager-Pixel (Bij) ermittelt.

12. Verfahren zum Erstellen eines Bildes unter Verwendung eines monokularen Kamerasystems nach Anspruch 10 oder 11, bei dem
Imagerpixel-Bildsignale (bij) der Imager-Pixel (Bij) des Imager-Halbleiterbauelementes (6) ausgelesen werden,
ein Erfassungsbereich (5) mit modulierter Strahlung beleuchtet wird,
Mess-Zellen-Signale (pkl) der Mess-Zellen (Pkl) des Imager-Halbleiterbauelementes (6) ausgelesen werden,
aus den Mess-Zellen-Signalen (pkl) Entfernungsinformationen (d) ermittelt werden, und
ein kombiniertes Bild aus Imager-Bildsignalen (bij) und Entfernungsinformationen (d) erstellt und auf einer Anzeigeeinrichtung ausgegeben wird.

13. Verfahren nach Anspruch 12, **dadurch gekennzeichnet, dass** aus den ermittelten Entfernungsinformationen (d) der Mess-Zellen-Signale (pkl) aus einer bekannten Kreuzkorrelation zwischen den Imager-Pixeln (Bij) und Mess-Zellen (Pkl) Entfernungsinformationen (d) für die Bildsignale (bij) der Imager-Pixel (Bij) ermittelt werden und in dem ausgegebenen Bild die Bildsignale (bij) mit den ermittelten Entfernungsinformationen (d) dargestellt werden.

14. Verfahren nach Anspruch 12 oder 13, **dadurch gekennzeichnet, dass** zu Matrixstellen der zweidimensionalen Matrix von Imager-Pixeln (Bij), die durch Mess-Zellen (Pkl) ersetzt sind, Bildwerte mittels Interpolation aus Bildsignalen (bij) der umgebenden Imager-Pixel (Bij) ermittelt werden.

15. Verfahren nach Anspruch 14, **dadurch gekennzeichnet, dass** zu den Matrixstellen der Mess-Zellen (Pkl) Bildwerte durch einen Bildalgorithmus mit einer Tote-Pixel-Korrektur ermittelt werden, bei dem zeitlich sich nicht ändernde Bildsignale als fehlerhaft erkannt und durch eine Interpolation ersetzt werden.

16. Verfahren nach einem der Ansprüche 12 bis 15, **dadurch gekennzeichnet, dass** von der Beleuchtungseinrichtung (7) hochfrequent modulierte IR-Strahlung (IR) ausgegeben wird und die als PMZ-Zellen ausgebildeten Mess-Zellen (Pkl) des Imager-Halbleiterbauelementes (6) mit einem Referenzsignal angesteuert werden.
